# EUROPEAN PATENT SPECIFICATION

(11) **EP 1 614 614 B1**
(45) Date of publication and mention of the grant of the patent: **02.04.2008**
(21) Application number: 05014806.3
(22) Date of filing: 07.07.2005
(51) Int. Cl.: B62K 11/04

(54) **Motorcycle**
Motorrad
Motocyclette

(30) Priority: 07.07.2004 JP 2004200996
(43) Date of publication of application: 11.01.2006
(73) Proprietor: Yamaha Hatsudoki Kabushiki Kaisha, Iwata-shi, Shizuoka-ken (JP)
(72) Inventor: Matsui, Hiroaki, Iwata-shi, Shizuoka-ken (JP)
(74) Representative: Grünecker, Kinkeldey, Stockmair & Schwanhäusser Anwaltssozietät

(56) References cited:
- EP-A- 0 826 584

## Description

The present invention relates to a motorcycle, and in particular to a motorcycle provided with a body frame and a rear arm supported for pivotal motion by the body frame via a pivotal shaft, and more particularly to a structure for fitting a parts mounting bracket to the body frame.

A motorcycle described in JP-A-Hei 10-86873, for instance, employs a structure for fitting a footrest bracket to a body frame that the upper end portion of the footrest bracket is fitted to the body frame together with a rear arm by means of a pivotal shaft, while the lower end portion of the footrest bracket is secured to two boss portions provided on the body frame by tightening the bolts.

By the way, there has been employed a structure that the upper end portion of the footrest bracket is secured to a pivotal shaft, and the lower end portion of the footrest bracket is secured to a boss portion on the body frame. This requires the provision of boss portion on the body frame in advance, which in turn raises a problem that the boss portion hinders the efficient surface finishing for the body frame. For instance, a finishing process of surface smoothing treatment may be difficult when the body frame is made in die casting process. More specifically, when the die casting is employed for the body frame for the purpose of weight reduction and improved external appearance, the casting surface tends to be rough because the die casting process gives adverse effect on the durability of the die. Thus, the frame surface must be finished with sander and the like to make it flat and smooth. In the course of such smooth finishing, any recess or protrusion, such a boss described above, will impair the efficiency of the finishing process. Therefore, the recess or protrusion had better be avoided as far as practicable on the surface. On the other hand, provision of flat surface on the body frame requires some devisal for fixing the parts mounting bracket to the body frame.

Similar to the aforesaid, in EP 0826584 A2, a rear arm of a motorcycle is mounted to a supporting bracket of a body frame of said motorcycle. On both outer sides of the rear arm, footrest brackets are arranged. A pivot being formed as a hexagon head screw is inserted on one side into an upper hole of a left-hand footrest bracket so as to extend through corresponding arm head portions of the rear arm and the supporting bracket to pivotally mount the rear arm to the body frame.

On the other side of the rear arm, the pivot extends also through the right- hand side footrest bracket, whereby the screw is secured by a hexagon nut mounted on the thread of the hexagon head screw. The lower portion of each footrest bracket is mounted directly to the body frame with bolts by means of two pipe-like bosses extending from the body frame.

The present invention has been made in light of the actual conventional condition mentioned above. It is therefore an objective of the invention to provide a motorcycle that allows easy surface treatment on a body frame, and that allows a parts mounting bracket to be firmly secured to the body frame.

According to the present invention, said objective is solved by a motorcycle having the combination of features of independent claim 1.

According to a preferred embodiment, the rear arm is supported for vertical, pivotal motion by the rear arm pivotally-supporting portion on the body frame via the pivotal shaft, wherein the rear arm has a left and a right arm head portions with the pivotal shaft being inserted through bearing portions located at their front ends, wherein the left and the right arm head portions are disposed on the transversely outside of the rear arm pivotally-supporting portion, wherein the parts mounting bracket is disposed on the outside of each of the left and the right arm head portions, and wherein the first portion of each parts mounting bracket is secured to the pivotal shaft and the second portion thereof is secured to the body frame.

Further, preferably a boss portion is formed in the portion of the parts mounting bracket to be mounted to the pivotal shaft.

Still further, preferably the intermediate bracket disposed on a first side of the motorcycle body is formed as a stand bracket for supporting a side stand, the stand bracket and the parts mounting bracket being a forging and a die-casting of light alloy, respectively.

Yet further, preferably the intermediate bracket disposed on a second side of the motorcycle body is formed as an exhaust pipe supporting bracket, the exhaust pipe supporting bracket and the parts mounting bracket being die castings of light alloy.

According to another preferred embodiment, the body frame is of an assembling type with left and right frame members fastened with a bolt, the rear arm for supporting at its rear end a rear wheel is supported for pivotal motion via the pivotal shaft by the rear arm pivotally-supporting portions of the body frame, and brackets, as support members, are detachably mounted to the body frame, wherein the rear arm pivotally-supporting portions of the body frame have left and right side walls through which the pivotal shaft is inserted, and left and right connecting walls which extend from the respective side walls toward a center of a motorcycle body and abut on each other, wherein the brackets have first boss portions through which the pivotal shaft is inserted, and second boss portions fixed to the body frame, and wherein the rear arm has left and right arm head portions through which the pivotal shaft is inserted and which are disposed between the side walls and the first boss portions.

Therein, preferably the side walls and the connecting walls of the rear arm pivotally-supporting portions are formed integrally.

Moreover, preferably the arm head portions of the rear arm, and the side walls and the connecting walls of the rear arm pivotally-supporting portions are fastened together by means of the pivotal shaft.

In addition, preferably the brackets include a parts mounting bracket for mounting any one of a footrest, a side stand, or an exhaust device part to the body frame.

Yet further, preferably the brackets include any two of a footrest bracket, a side stand bracket, or an exhaust device part supporting bracket.

Still further, preferably the connecting walls of the rear arm pivotally-supporting portions are formed on front and rear sides of the pivotal shaft in the motorcycle body.

In the following, the present invention is explained in greater detail with respect to several embodiments thereof in conjunction with the accompanying drawings, wherein:
- FIG. 1: is a side view of a motorcycle according to an embodiment;
- FIG. 2: is a top plan view of the motorcycle;
- FIG. 3: is a left side view of a rear arm on the motorcycle;
- FIG. 4: is a cross-sectional view of a pivotal shaft on the rear arm (cross-sectional view along the line IV-IV in FIG. 3);
- FIG. 5: is a top plan view of the rear arm;
- FIG. 6: is a right side view of the rear arm;
- FIG. 7: is a cross-sectional view along the line VII-VII in FIG. 3;
- FIG. 8: is a cross-sectional view along the line VIII-VIII in FIG. 6;
- FIG. 9: is a cross-sectional view along the line IX - IX in FIG. 8;
- FIG. 10: is a left side view of a parts mounting bracket according to this embodiment;
- FIG. 11: is a cross-sectional view along the line XI - XI in FIG. 10;
- FIG. 12: is a cross-sectional view along the line XI - XI in FIG. 10;
- FIG. 13: is a cross-sectional view along the line XIII - XIII in FIG. 10;
- FIG. 14: is a right side view of a parts mounting bracket according to the embodiment;
- FIG. 15: is a cross-sectional view along the line XV - XV in FIG. 14; and
- FIG. 16: is a cross-sectional view along the line XVI - XVI in FIG. 14.

An embodiment is described with reference to the attached drawings, in which:

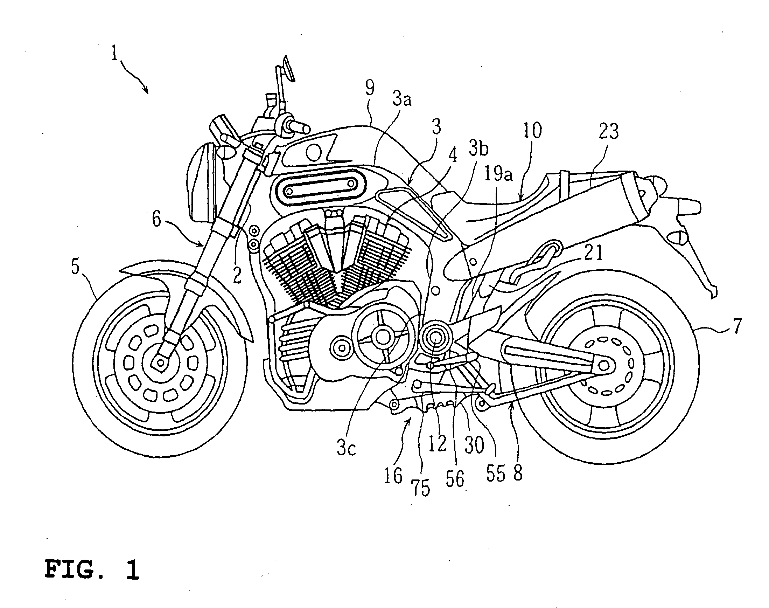

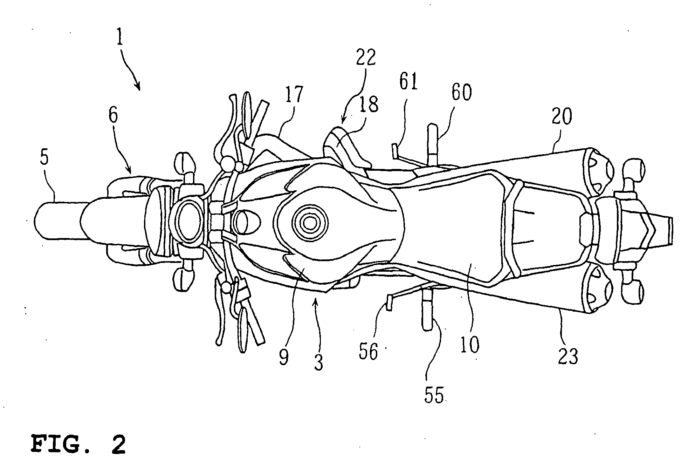

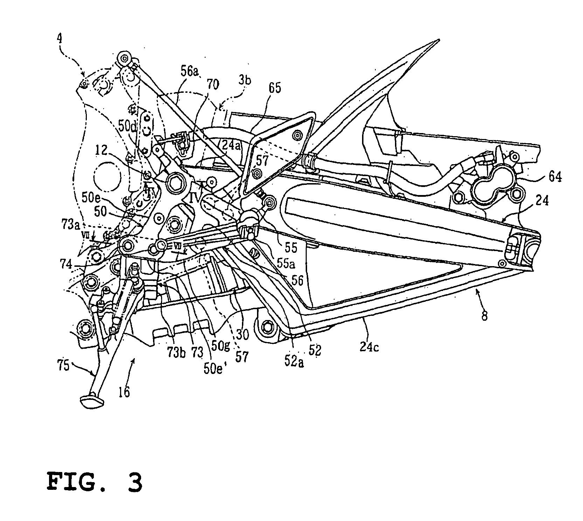

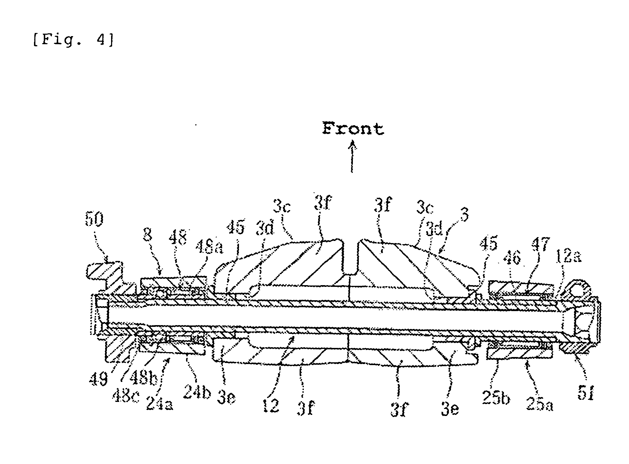

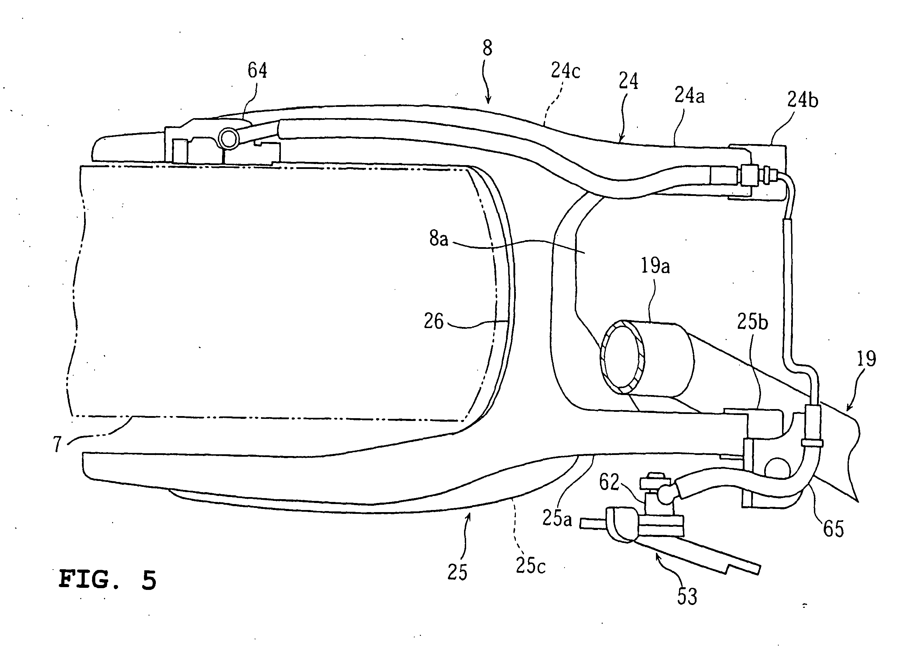

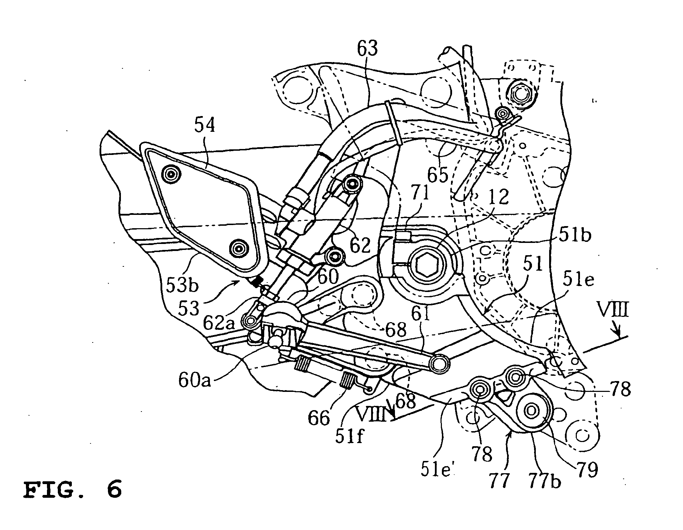

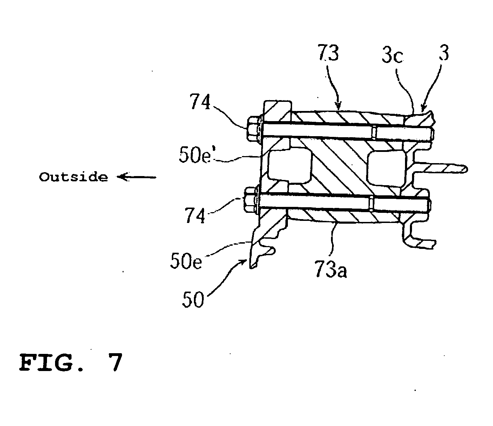

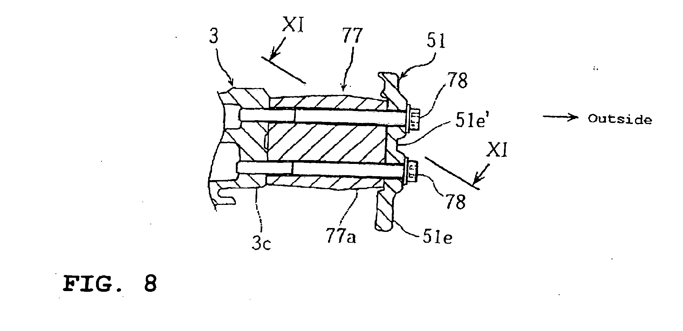

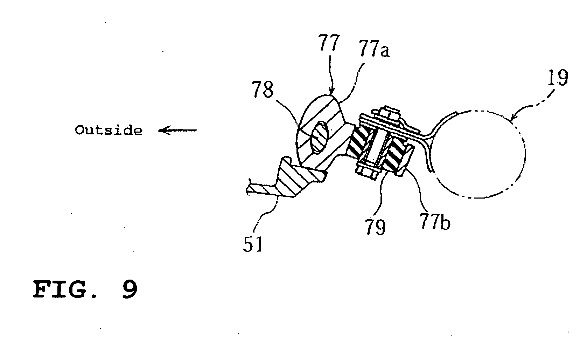

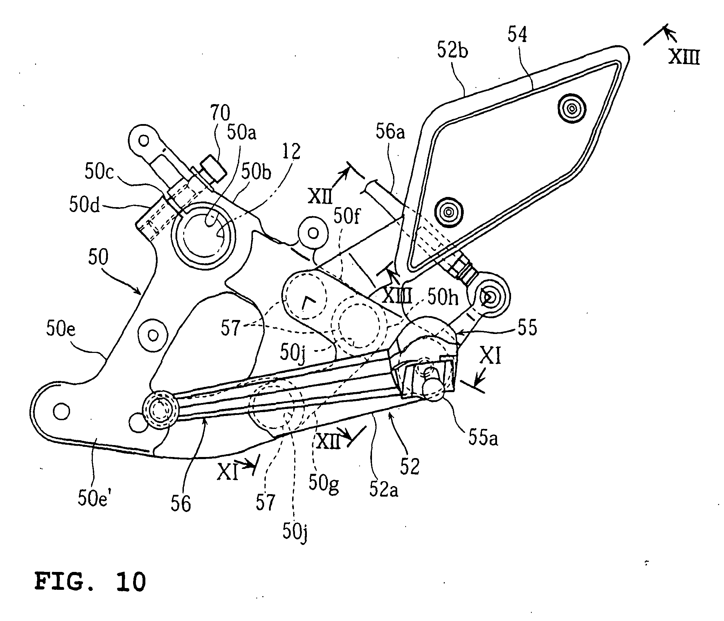

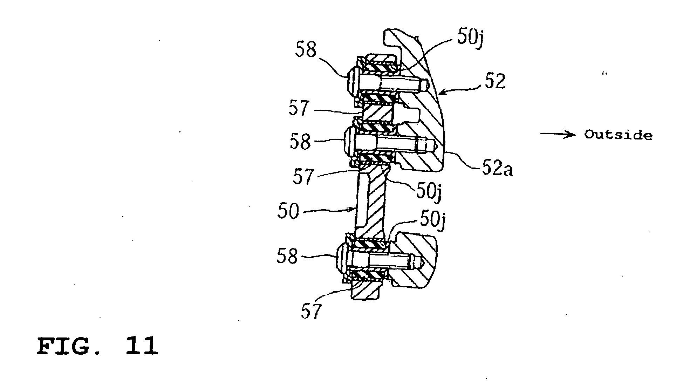

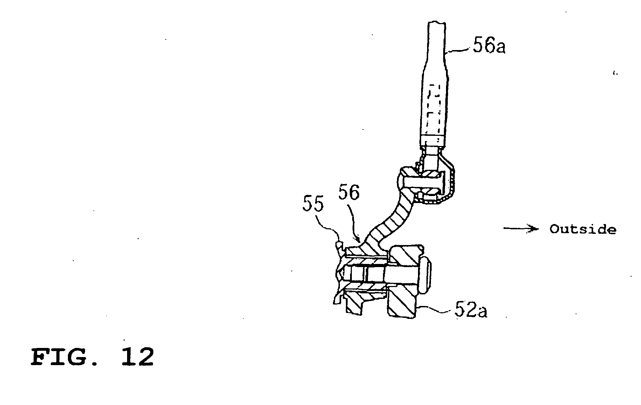

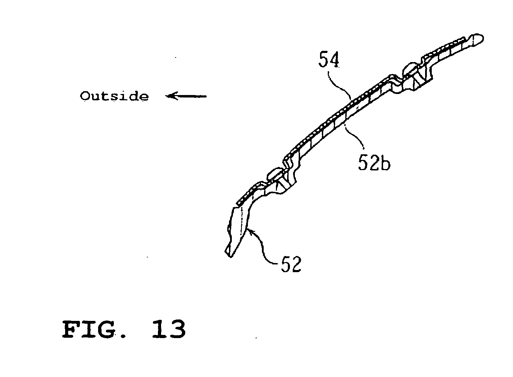

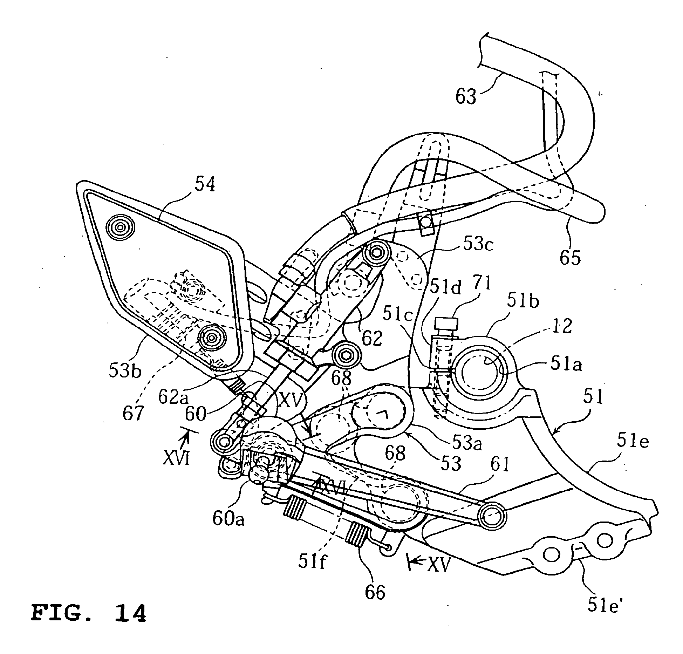

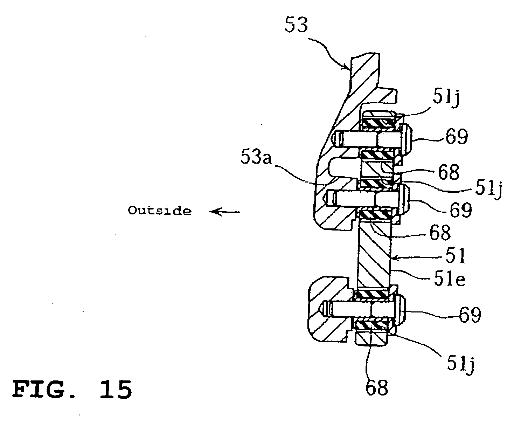

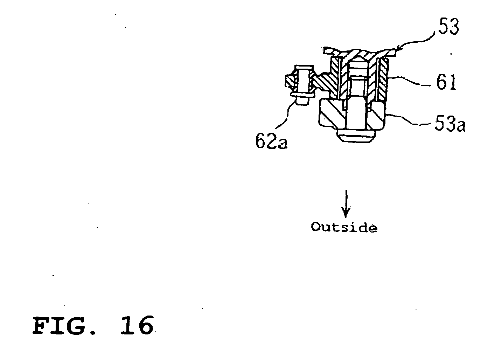

FIGs. 1 through 16 illustrate a motorcycle according to an embodiment. FIGs. 1 and 2 are a side view and a top plan view of the motorcycle, respectively. FIG. 3 is a left side view of a rear arm. FIG. 4 is a cross-sectional view regarding a pivotal shaft of the rear arm (a cross-sectional view, taken along the line IV-IV in FIG. 3). FIG. 5 is a top plan view of the rear arm. FIG. 6 is a right side view of the rear arm. FIG. 7 is a cross-sectional view, taken along the line VII - VII in FIG. 3. FIG. 8 is a cross-sectional view, taken along the line VIII - VIII in FIG. 6. FIG. 9 is a cross-sectional view, taken along the line IX - IX in FIG. 8. FIG. 10 is a left side view of a left side footrest bracket. FIG. 11 is a cross-sectional view, taken along the line XI - XI in FIG. 10. FIG. 12 is a cross sectional view, taken along the line XII - XII in FIG. 10. FIG. 13 is a cross sectional view, taken along the line XIII - XIII in FIG. 10. FIG. 14 is a right side view of the right side footrest bracket. FIG. 15 is a cross-sectional view, taken along the line XV - XV in FIG. 14. FIG. 16 is a cross-sectional view, taken along the line XVI - XVI in FIG. 14.

Additionally, the terms "right," "left," "front" and "rear" used in this embodiment refer to the right, left, front and rear sides for a rider seated on the seat.

In the drawings, reference numeral 1 defines a motorcycle which has the following structure: An engine 4 is installed in a body frame 3 extending from the head pipe 2 to the rear of the motorcycle body. A front fork 6 for supporting a front wheel 5 is pivotally supported by the head pipe 2 so that it can be steered to both sides. A rear arm 8 for supporting a rear wheel 7 is supported for vertical, pivotal motion by a rear arm bracket portion 3b of the body frame 3 via a pivotal shaft 12. Further, a rear wheel suspension device 16 is disposed between the rear arm 8 and the securing portion on the motorcycle body (engine). A fuel tank 9 and a seat 10 are disposed on the body frame 3. Further, an exhaust device 22 extending to the rear of the motorcycle body is joined to the engine 4.

The body frame 3 is of an assembling type constructed by a right and a left frame member as die-cast product, which are joined with fastening bolts. The respective right and the left frame member are structured by integrally molding a right and a left main frame portion 3a, 3a and a right and a left rear arm bracket portion 3b, 3b, respectively. The respective main frame portions 3a, 3a extend rearward while outwardly spreading to both sides and then extend slantingly downward narrowing the distance therebetween. The right and the left rear arm bracket portions 3b, 3b extend downward generally in the vertical direction from the respective rear ends of the right and the left main frame portions 3a, 3a.

The front ends of the left and right main frame portions 3a, 3a are clamped to each other by bolts that are arranged to sandwich the head pipe. The lower ends of the left and the right rear arm bracket portion 3b, 3b are abutted with each other at the transverse center position of the motorcycle body. Each abutting area constitutes a rear arm pivotally-supporting portion 3c. The surfaces of the left and the right rear arm pivotally-supporting position 3c are finished with a sander or the like, which gives the surfaces a smooth flatness without irregularity. In addition, the rear ends of the main frame portion 3a, 3a on the right and on the left is joined to the forward end of the seat rail (not shown) extending slantingly upward. The engine 4 is secured by fastening bolts so as to bridge between the left and the right main frame portion 3a, 3a and between the lower portions of the left and the right rear arm bracket portions 3b. Thus, the engine 4 functions as a component for enhancing strength, constituting one part of the body frame 3.

The rear arm 8 includes a left and a right rear arm body 24, 25 each having a generally square hollow section, and a cross member 26 which connects the rear arm bodies 24, 25 with each other at a position proximate to the forward of a rear wheel 7. The rear wheel 7 is disposed between the rear ends of the left and the right rear arm body 24, 25. Respective parts of the rear arm bodies 24, 25 that lie in the forward of the cross member 26 constitute a right and a left arm head portion 24a, 25a, respectively.

Cylindrical bearing portions 24b, 25b are formed in the forward end of the arm head portions 24a, 25a for inserting the pivotal shaft 12.

On the bottom sides of the left and the right rear arm body 24, 25, reinforcement sections 24c, 25c, generally taking a dogleg shape, are molded integrally to form a downward protrusion. When viewed sideways, the rear arm body and the reinforcement part are arranged to make generally an inverted triangle.

An area enclosed by the left and the right arm head portion 24a, 25a, the cross member 26, and the pivotal shaft 12 make an arm head portion space 8a (see FIG. 5). Within the arm head portion space 8a, a rising portion 19a of an exhaust pipe 19 connected to the engine 4 is disposed to go upward from the area below the pivotal shaft 12. Top end of the rising portion 19a is connected to a left and a right muffler 20, 24 disposed slantingly upward along the lower edge of the left and the right side of the seat 10, respectively.

As shown in FIG. 4, the left and the right arm head portions 24a, 25a are positioned transversely outside of the left and the right rear arm pivotally-supporting portion 3c, 3c on the body frame 3, respectively. The left and the right rear arm pivotally-supporting portions 3c, 3c in effect form a single frame once they are tightened together by the pivotal shaft 12 via the left and the right bearing portion 24b, 25b.

Pivot holes 3d, 3d, extending in the transverse direction of the motorcycle, are formed in the left and the right rear arm pivotally-supporting portion 3c, 3c. Cylindrical stopper members 45, 45 are inserted into the pivot holes 3d, respectively, in the condition that the inward movement of each stopper member 45, 45 is restricted by abutting it on the external end face of the rear arm pivotally-supporting portion 3c.

A cylindrical collar member 46 is abutted on the external end face of the right stopper member 45 on the pivotal shaft 12. The collar member 46 is engaged with a stepped portion 12a on the pivotal shaft 12, and its outward movement in its axial direction is restricted. The bearing portion 25b on the right arm head portion 25a is installed in the periphery of the collar member 46 via a needle bearing 47.

On the other hand, a collar member 48a for a needle bearing 48 mounted on the pivotal shaft 12, a ball bearing 48b, and a collar member 48c are abutted one by one on the external end face of the left stopper member 45 on the pivotal shaft 12. Then, by tightening a nut 49, which has been screwed-on at the left end portion of the pivotal shaft 12, the left and the right rear arm pivotally-supporting portions 3c are joined with each other in the clamping condition via each stopper member 45, the collar members 46, 48a, and 48c, and the bearing 48b.

Parts mounting brackets 50, 51 are disposed on the transversely outside of the left and the right arm head portion 24a, 25a, respectively. The left and the right parts mounting bracket 50, 51 are both die castings of aluminum alloy. Additionally, each of the mounting brackets 50, 51 generally flush with the external end faces of the pivotal shaft 12 along the shaft axis. A right and left footrest assembly 52, 53 are disposed outside of the parts mounting brackets 50, 51, respectively.

As shown mainly in FIG. 3 as well as FIGs. 10 through 13, the parts mounting bracket 50 on the left side has a structure that a bolt screw-in portion 50d having a tightening slit 50c is integrally formed with a boss portion 50b which has a through hole 50a for inserting the pivotal shaft 12, and that the boss portion 50b is integrally formed with a front edge portion 50e extending downward, a rear edge portion 50f extending rearward, and a lower edge portion 50g for connecting the rear edge portion 50f and the front edge portion 50e.

The left footrest assembly 52 has a structure that a footrest bracket portion 52a of a generally crotched shape configured to cover the external surfaces of the rear edge 50f and the lower edge 50g is formed integrally with a protector portion 52b of a rhombic shape extending slantingly upward from the footrest bracket portion 52a so as to face the rider's ankle, and that a footrest 55 and a shifting pedal 56 are mounted at the rear end area of the footrest bracket portion 52a.

The shifting pedal 56 is joined to a shift rod 56a, which is in turn joined to a transmission in the unit case 4c. In addition, a bank angle sensor 55a is formed so as to project at the distal end of the bottom face on the footrest 55. Further, a design plate 54 is attached on the external face of the protector portion 52b to improve external appearance.

The footrest bracket portion 52a of the footrest assembly 52 is supported by the parts mounting bracket 50 interposing each elastic member 57, 57, 57 of rubber therebetween. An insert hole 50j is formed in each of the rear edge portion 50f, the lower edge portion 50g, and a connecting portion 50h of both edge portions 50f, 50g. The elastic member 57 is put in every insert hole 50j, and a bolt 58 is inserted into the axial core portion of the elastic member 57 from the inner side of the motorcycle body. The footrest assembly 52 is secured to the parts mounting bracket 50 by tightening the bolt 58 onto the footrest bracket portion 52a.

In this way, each of the elastic members 57 and the bolts 58 are masked by the footrest bracket portion 52a of the footrest assembly 52 so that they cannot be recognized from the outside of the motorcycle.

As shown mainly in FIG. 6 as well as FIGs. 14 through 16, the parts mounting bracket 50 on the right side has a structure that a bolt screw-in portion 51 d having a tightening slit 51 c is integrally formed with a boss portion 51 b which has a through hole 51 a for inserting the pivotal shaft 12, and that a stretch-out portion 51e extending downward taking generally a sector shape is integrally formed with the boss portion 51 b.

The right footrest assembly 53 has a structure that a footrest bracket portion 53a of a generally crotched shape configured to cover the external surface of a rear vertical edge 51f of the stretch-out portion 51e, is formed integrally with a cylinder bracket portion 53c extending upward from the footrest bracket portion 53a and with a protector portion 53b of a rhombic shape extending slantingly upward from the footrest bracket portion 53a so as to face the rider's ankle. It also has a structure that a footrest 60 and a brake pedal 61 are mounted at the rear end area of the footrest bracket portion 53a. Reference numeral 54 defines a design plate, and 60a defines a bank angle sensor.

A master cylinder 62 is mounted to the cylinder bracket portion 53c. A piston rod 62a of the master cylinder 62 is connected to the brake pedal 61. The master cylinder 62 is also connected to a reserve hose 63 and a brake hose 65. The reserve hose 63 is connected to a reservoir tank (not shown), and the brake hose 65 is connected to a caliper 64 for a disk brake of the rear wheel 7. Reference numeral 66 defines a brake pedal return spring, and 67 a brake lamp switch.

The footrest bracket portion 53a of the footrest assembly 53 is supported by the parts mounting bracket 51 interposing each elastic member 68, 68, 68 of rubber therebetween. Insert holes 51j are formed on a rear vertical edge 51f of the parts mounting bracket 51 so that they are apart each other by a given distance and the lines connecting their centers make a triangle. The elastic member 68 is put in every insert hole 51j, and a bolt 69 is inserted into the axial core portion of the elastic member 68 from the inner side of the motorcycle body. The footrest assembly 53 is secured to the parts mounting bracket 51 by tightening the bolt 69 into the footrest bracket portion 53a.

In this way, each of the elastic members 68 and the bolts 69 are masked by the footrest bracket portion 53a of the footrest assembly 53 so that they cannot be recognized from the outside of the motorcycle.

The boss portion 50b of the left parts mounting bracket 50 is secured to the pivotal shaft 12 by mounting the through hole 50a onto the external circumference face of the nut 49 of the pivotal shaft 12, and fastening a tightening bolt 70 inserted in the bolt screw-in portion 50d.

Further, as shown in FIG. 3 and FIG. 7, a lower end portion 50e' of the front edge portion 50e on the parts mounting bracket 50 is secured to the rear arm pivotally-supporting portion 3c of the body frame 3 together with a stand bracket (intermediate bracket) 73 by means of two bolts 74, 74 screwed-in from the outer side of the motorcycle body

Different from the parts mounting bracket 50, the stand bracket 73 is a forging of aluminum alloy. The stand bracket 73 includes a tightening portion 73a and an extended portion 73b extending downward from the tightening portion 73a. A side stand 75 is mounted on the extended portion 73b for rotation between the operating position and the fold-up position.

The boss portion 51 b of the right parts mounting bracket 51 is secured to the pivotal shaft 12 by mounting the through hole 51 a onto the external circumference face of the pivotal shaft 12, and fastening a tightening bolt 71 inserted in the bolt screw-in portion 51 d.

Further, as shown in FIG. 6, FIG. 8, and FIG. 9, a lower end portion 51e' of the stretch-out portion 51e on the parts mounting bracket 51 is secured to the rear arm pivotally-supporting portion 3c of the body frame 3 together with an exhaust pipe supporting bracket (intermediate bracket) 77 by means of two bolts 78, 78 screwed-in from the outer side of the motorcycle body. The exhaust pipe supporting bracket 77 is independent from the parts mounting bracket 51 and is interposed between the lower end portion 51e' and the pivotally-supporting portion 3c.

The exhaust pipe supporting bracket 77 is a die-cast product of aluminum alloy. The exhaust pipe supporting bracket 77 includes a tightening portion 77a and a cylindrical body 77b extending downward from the tightening area 77a. The exhaust pipe 19 is supported by the exhaust pipe supporting bracket 77 via a rubber dumper 79 mounted in the cylindrical body 77b.

According to this embodiment, the left and the right parts mounting bracket 50, 51 are disposed on the outer side of the left and the right arm head portion 24a, 25a, and secured to the pivotal shaft 12. The foot rest assemblies 52, 53 are mounted on the left and the right parts mounting bracket 50, 51 with elastic members 57, 68 interposed respectively therebetween. Applying such structure, vibration from the road surface can be absorbed by the elastic members 57, 68. Thus, the vibration transmitted to the left and the right footrests 55, 60 are restricted, and improved riding comfort can be obtained.

In addition, each elastic member 57, 68 and each bolt 58, 69 are covered on their outside by the footrest bracket portions 52a, 53a of the footrest assemblies 52, 53. This arrangement prevents the degradation of external appearance due to the exposure of the elastic members 57, 68 and the bolts 58, 69 to the outside.

According to this embodiment, the left and the right rear arm pivotally-supporting portion 3c do not have any recess or protrusion. This facilitates smoother surface finishing process when the body frame 3 is a die-cast product. More specifically, when the body frame 3 made by die casting process is employed for the purpose of weight reduction and improved external appearance, the casting surface tends to be rough because the die casting process gives adverse effect on the durability of the die. Thus, the body frame surface must be finished with a sander to make it flat and smooth. In the course of such smooth finishing, any recess or protrusion on the rear arm pivotally-supporting portion 3c will cause the problem, since they will impair the efficiency of the finishing process.

According to this embodiment, each boss portion 50b, 51 b is provided on a portion of corresponding parts mounting bracket 50, 51, and the left and the right parts mounting brackets 50, 51 are secured to the pivotal shaft 12 by tightening up the boss portions 50b, 51 b with the tightening bolts 70, 71. Thus, at the time of maintenance or replacement of the parts mounting brackets 50, 51 and the footrests 55, 60, the parts mounting bracket 50, 51 can be removed from the pivotal shaft 12 simply by loosening the tightening bolts 70, 71 and the fastening bolts 74, 78 that secure them onto the body frame. Besides, the parts can be fixed in place easily when they are installed on the pivotal shaft 12, which facilitates the parts replacement work. More specifically, in the conventional structure disclosed in the publication of the prior art, the bracket is secured to the body frame by tightening it together with the rear arm by means of the pivotal shaft. In this case, the pivotal shaft must be removed from the body frame and the rear arm for maintenance or replacement, requiring a complex work.

According to this embodiment, the boss portions 50b, 51 b of the left and the right parts mounting bracket 50, 51 are secured to the pivotal shaft 12, while the left and the right lower end portion 50e', 51e' are secured to the left and the right rear arm pivotally-supporting portion 3c, on the body frame 3, interposing the independently provided stand bracket 73 and the exhaust pipe supporting bracket 77 respectively. Applying such structure, recesses and protrusions, such as a boss portion for securing each parts mounting bracket 50, 51 onto the rear arm pivotally-supporting portion 3c, are not required. This facilitates the surface smoothing treatment on the rear arm pivotally-supporting portion 3c.

In addition, each of the parts mounting brackets 50, 51 is secured to the rear arm pivotally-supporting portion 3c interposing the independently provided stand bracket 73 and the exhaust pipe supporting bracket 77 respectively. Therefore, the appropriate shape, material, manufacturing process, and other aspects may be chosen so as to satisfy the requirements for rigidity and strength regarding each parts mounting bracket 50, 51, the stand bracket 73 and the exhaust pipe supporting bracket 77. This enables weight reduction and cost cutting while maintaining the required rigidity and strength.

Further, the pivotal shaft 12 is secured to the left and the right rear arm pivotally-supporting portion 3c of the body frame 3, and the parts mounting bracket 50, 51 are secured on the outside of the pivotal shaft 12. Further, the stand bracket 73 and the exhaust pipe supporting bracket 77are interposed between the parts mounting bracket 50, 51 and the body frame. As a result, the enhanced rigidity is provided around the rear arm pivotally-supporting portion 3c.

According to this embodiment, the stand bracket 73 and the parts mounting bracket 50 are made as independent parts. This allows them to be made as a forging and a die casting of aluminum alloy, respectively, to assure the rigidity and the strength required for the stand bracket 73 for supporting the motorcycle body. This also allows the additional flexibility of shapes chosen, as well as the cost reduction.

According to this embodiment, both the exhaust pipe supporting bracket 77 and the parts mounting bracket 51 are die castings of aluminum alloy. This allows these parts to be manufactured at lower cost than the forging process, while maintaining the rigidity and the strength required for supporting the exhaust pipe 19.

Also, the exhaust pipe supporting bracket 77 and the parts mounting bracket 51 are made as independent parts. Therefore, either the parts mounting bracket 51 or the exhaust pipe supporting bracket 77 may be a forging, and the other be a casting. This allows higher flexibility regarding the manufacturing process, enabling the selection of manufacturing process that is effective for the cost reduction.

The description above discloses (amongst others) an embodiment of a motorcycle having a body frame; and a rear arm that is supported for vertical, pivotal motion by a rear arm pivotally-supporting portion on the body frame via a pivotal shaft, wherein the rear arm has a left and a right arm head portions with a pivotal shaft being inserted through the bearing portions located at their front ends; the left and the right arm head portions are disposed on the transversely outside of the rear arm pivotally-supporting portion; a parts mounting bracket is disposed on the outside of each of the left and the right arm head portions, a portion of each parts mounting bracket is secured to the pivotal shaft, and another portion thereof is secured to the body.

Accordingly, a portion of the parts mounting bracket is secured to the pivotal shaft and another portion of the parts mounting bracket is secured to the body frame. Applying such structure, recesses and protrusions, such as a boss portion for securing the parts mounting bracket onto the body frame, are not required. This facilitates the surface finishing process on the body frame. Thus the smooth surface finishing process can be performed easily when the body frame is made of die casting, for instance. Also, improved rigidity can be obtained around the rear arm pivotally-supporting portion, as a portion of the parts mounting bracket is secured to the pivotal shaft, and another portion of the parts mounting bracket is secured to the body frame.

According to another embodiment of the motorcycle, the another portion of the parts mounting bracket is secured to the body frame via an intermediate bracket provided as an independent part from the parts mounting bracket.

Accordingly, the parts mounting bracket is secured to the body frame via the intermediate bracket provided as an independent part. More specifically, since the parts mounting bracket and the intermediate bracket are made as independent parts, appropriate shape, material, manufacturing process may be chosen so as to satisfy the requirements of rigidity and strength for each part, which enables reductions in regard to the cost and the weight.

According to yet another embodiment, a boss portion to be mounted to the pivotal shaft is formed in the portion of the parts mounting bracket.

Accordingly, the boss portion to be mounted to the pivotal shaft is formed on the parts mounting bracket, facilitating the correct positioning and mounting/removing process for the parts mounting bracket. If the parts mounting bracket is secured by being sandwiched and clamped by the pivotal shaft, for instance, mounting/removing of the parts mounting bracket will require the process of pulling-out the pivotal shaft, etc. The present embodiment eliminates such requirement.

Further, preferably the intermediate bracket disposed on one side of the motorcycle body is formed as a stand bracket for supporting a side stand, the stand bracket and the parts mounting bracket being a forging and a die casting of light alloy, respectively.

Accordingly, the intermediate bracket is formed as a stand bracket, and the stand bracket and the parts mounting bracket are made of light alloy forging and die casting, respectively. Since the stand bracket for supporting the motorcycle body is a casting as described above, the rigidity and the strength required for the stand bracket can be attained easily. Also, since the stand bracket and the parts mounting bracket are made as independent parts, excessive drawing depth at forging can be prevented. Thus the stand bracket can be made as a die forged product.

According to still another embodiment, the intermediate bracket disposed on the other side of the motorcycle body is formed as an exhaust pipe supporting bracket, the exhaust pipe supporting bracket and the parts mounting bracket being die castings of light.

Accordingly, the intermediate bracket is formed as an exhaust pipe supporting bracket, and both the exhaust pipe supporting bracket and the parts supporting bracket are made as a die cast product of light alloy. This allows these components to be fabricated at lower cost than the forging, and yet assures the rigidity and strength required for supporting the exhaust pipe. In addition, the exhaust pipe supporting bracket is made independently from the parts mounting bracket. Therefore, either the parts mounting bracket or the exhaust pipe supporting bracket may be made as a casting, and the other may be made as a die casting. This allows higher flexibility for choosing the manufacturing process which will allow cost and weight reductions.

The description further discloses an embodiment a motorcycle comprising: a body frame 3 of an assembling type with left and right frame members fastened with a bolt; a rear arm 8 for supporting at its rear end a rear wheel and is supported for pivotal motion via a pivotal shaft 12 by rear arm pivotally-supporting portions 3c, 3c of the body frame 3; and brackets (support members) 50, 51 detachably mounted to the body frame 3, wherein the rear arm pivotally-supporting portions 3c, 3c of the body frame 3 have left and right side walls 3e, 3e through which the pivotal shaft 12 is inserted, and left and right connecting walls 3f, 3f which extend from the respective side walls 3e, 3e toward a center of a motorcycle body and a but on each other; the brackets 50, 51 have first boss portions 50d, 51 b through which the pivotal shaft 12 is inserted, and second boss portions 50e' and 51f fixed to the body frame 3; and the rear arm 8 has left and right arm head portions 24b, 25b through which the pivotal shaft 12 is inserted and which are disposed between the side walls 3e, 3e and the first boss portions 50d, 51 b.

Preferably, the side walls 3e, 3e and the connecting walls 3f, 3f of the rear arm pivotally-supporting portions 3c, 3c are formed integrally.

Further, preferably the arm head portions 24b, 25b of the rear arm 8, and the side walls 3e, 3e and the connecting walls 3f, 3f of the rear arm pivotally-supporting portions 3c, 3c are fastened together by means of the pivotal shaft 12.

Still further, preferably the brackets include a parts mounting bracket for mounting any one of a footrest, a side stand, or an exhaust device part to the body frame.

Yet further, preferably the brackets include any two of a footrest bracket, a side stand bracket, or an exhaust device part supporting bracket.

Also, it is beneficial if the connecting walls 3f, 3f of the rear arm pivotally-supporting portions 3c, 3c are formed on front and rear sides of the pivotal shaft 12 in the motorcycle body.

Thus, according to a preferred embodiment, in order to provide a motorcycle that allows easy surface treatment on a body frame, and at the same time allows a parts mounting bracket to be firmly secured to the body frame, parts mounting brackets 50, 51 are disposed on the outer side of the left and right arm head portions 24a, 25a of a rear arm 8. Boss portions 50b, 51 b of the parts mounting bracket 50, 51 are secured to the pivotal shaft 12, and another portion of each parts mounting bracket 50, 51 is secured to the body frame 3 via a stand bracket 73 and an exhaust pipe supporting bracket 77, which are separated from the parts mounting brackets 50, 51.

## Claims

1. Motorcycle comprising a body frame (3) and a rear arm (8) supported by a rear arm pivotally-supporting portion (3c) on the body frame (3) via a pivotal shaft (12), wherein a parts mounting bracket (50, 51) is provided such that a first portion of the parts mounting bracket (50, 51) is secured to the pivotal shaft (12), and a second portion of the parts mounting bracket (50, 51) is secured to the body frame (3) via an intermediate bracket provided as an independent part from the parts mounting bracket (50, 51).

2. Motorcycle according to claim 1, wherein the rear arm (8) is supported for vertical, pivotal motion by the rear arm pivotally-supporting portion (3c) on the body frame (3) via the pivotal shaft (12), wherein the rear arm (8) has a left and a right arm head portions (24a,25a) with the pivotal shaft (12) being inserted through bearing portions (24b,25b) located at their front ends, wherein the left and the right arm head portions (24a,25a) are disposed on the transversely outside of the rear arm pivotally-supporting portion (3c), wherein the parts mounting bracket (50,51) is disposed on the outside of each of the left and the right arm head portions (24a,25a), and wherein the first portion of each parts mounting bracket (50,51) is secured to the pivotal shaft (12) and the second portion thereof is secured to the body frame (3).

3. Motorcycle according to claim 1 or 2, further comprising a boss portion formed in the portion of the parts mounting bracket (50,51) to be mounted to the pivotal shaft (12).

4. Motorcycle according to one of claims 1 to 3, wherein the intermediate bracket disposed on a first side of the motorcycle body is formed as a stand bracket (73) for supporting a side stand, the stand bracket (73) and the parts mounting bracket (50,51) being a forging and a die-casting of light alloy, respectively.

5. Motorcycle according to one of claims 1 to 4, wherein the intermediate bracket disposed on a second side of the motorcycle body is formed as an exhaust pipe supporting bracket (77), the exhaust pipe supporting bracket (77) and the parts mounting bracket (50,51) being die castings of light alloy.

6. Motorcycle according to one of claims 1 to 5, wherein the body frame (3) is of an assembling type with left and right frame members (3a) fastened with a bolt, the rear arm (8) for supporting at its rear end a rear wheel (7) is supported for pivotal motion via the pivotal shaft (12) by the rear arm pivotally-supporting portions (3c) of the body frame (3), and brackets (50, 51), as support members, are detachably mounted to the body frame (3), wherein the rear arm pivotally-supporting portions (3c) of the body frame (3) have left and right side walls (3e) through which the pivotal shaft (12) is inserted, and left and right connecting walls (3f) which extend from the respective side walls (3e) toward a center of a motorcycle body and abut on each other, wherein the brackets (50,51) have first boss portions (50d,51b) through which the pivotal shaft (12) is inserted, and second boss portions (50e',51f) fixed to the body frame (3), and wherein the rear arm (8) has left and right arm head portions (24b,25b) through which the pivotal shaft (12) is inserted and which are disposed between the side walls (3e) and the first boss portions (50d,51 b).

7. Motorcycle according to claim 6, wherein the side walls (3e) and the connecting walls (3f) of the rear arm pivotally-supporting portions (3c) are formed integrally.

8. Motorcycle according to claim 6 or 7, wherein the arm head portions (24b,25b) of the rear arm (8), and the side walls (3e) and the connecting walls (3f) of the rear arm pivotally-supporting portions (3c) are fastened together by means of the pivotal shaft (12).

9. Motorcycle according to one of the claims 6 to 8, wherein the brackets include a parts mounting bracket for mounting any one of a footrest, a side stand, or an exhaust device part to the body frame.

10. Motorcycle according to one of the claims 6 to 9, wherein the brackets include any two of a footrest bracket, a side stand bracket, or an exhaust device part supporting bracket.

11. Motorcycle according to one of the claims 6 to 10, wherein the connecting walls (3f) of the rear arm pivotally-supporting portions (3c) are formed on front and rear sides of the pivotal shaft (12) in the motorcycle body.

## Patentansprüche

1. Motorrad mit einem Karosserierahmen (3) und einem hinteren Arm (8), gelagert durch einen Schwenklagerabschnitt (3c) für den hinteren Arm an dem Karosserierahmen (3) über eine Schwenkwelle (12), wobei ein Teile- Montagehalter (50, 51) derart vorgesehen ist, dass ein erster Abschnitt des Teile- Montagehalters (50, 51) an der Schwenkwelle (12) befestigt ist und ein zweiter Abschnitt des Teile-Montagehalters (50, 51) an dem Karosserierahmen (3) über eine Zwischenlagerung, vorgesehen als ein unabhängiges Teil von dem Teile- Montagehalter (50, 51), befestigt ist.

2. Motorrad nach Anspruch 1, wobei der hintere Arm (8) gelagert ist zur vertikalen Schwenkbewegung des Schwenklagerabschnittes (3c) für den hinteren Arm an dem Karosserierahmen (3) über die Schwenkwelle (12), wobei der hintere Arm (8) einen linken und einen rechten Arm- Kopfabschnitt (24a, 25a) aufweist, wobei die Schwenkwelle (12) durch Lagerabschnitte (24b, 25b), angeordnet an deren vorderen Enden, eingesetzt ist, wobei der linke und rechte Arm- Kopfabschnitt (24a, 25a) an der querlaufenden Außenseite des Schwenklagerabschnitt (3c) für den hinteren Arm angeordnet ist, wobei der Teile- Montagehalter (50, 51) an der Außenseite von jedem der linken und rechten Arm- Kopfabschnitte (24a, 25a) vorgesehen ist, und wobei der erste Abschnitt von jedem Teile- Montagehalter (50, 51) an der Schwenkwelle (12) befestigt ist und der zweite Abschnitt desselben an dem Karosserierahmen (3) befestigt ist.

3. Motorrad nach Anspruch 1 oder 2, außerdem aufweisend einen Nabenabschnitt, gebildet in dem Abschnitt des Teile- Montagehalters (50, 51), um an der Schwenkwelle (12) montiert zu werden.

4. Motorrad nach einem der Ansprüche 1 bis 3, wobei der Zwischenhalter, angeordnet auf einer ersten Seite der Motorradkarosserie, als ein Standhalter (73) zum Lagern eines Seitenstandes gebildet ist, wobei der Standhalter (73) und der Teile-Montagehalter (50, 51) jeweils eine Schmiedestück oder ein Druckgussstück einer Leichtlegierung ist.

5. Motorrad nach einem der Ansprüche 1 bis 4, wobei der Zwischenhalter, angeordnet auf einer zweiten Seite der Motorradkarosserie, als ein Abgasrohr- Lagerungshalter (77) gebildet ist, wobei der Abgasrohr- Lagerungshalter (77) und der Teile- Montagehalter (50, 51) Druckgussteile aus Leichtlegierung sind.

6. Motorrad nach einem der Ansprüche 1 bis 5, wobei der Karosserierahmen (3) von einem Zusammenbau- Typ mit linken und rechten Karosserierahmenteilen (3a) ist, befestigt mit einer Schraube, wobei der hintere Arm (8) zum Lagern eines Hinterrades (7) an seinem hinteren Ende für eine Schwenkbewegung über die Schwenkwelle (12) durch die Schwenklagerabschnitte (3c) für den hinteren Arm des Karosserierahmens (3) gelagert ist, und Halter (50, 51), als Lagerteile an dem Karosserierahmen (3), lösbar montiert sind, wobei die Schwenklagerabschnitte (3c) für den hinteren Arm des Karosserierahmens (3) linke und rechte Seitenwände (3e) haben, durch die die Schwenkwelle (12) eingesetzt ist, und linke und rechte Verbindungswände (3f), die sich von den jeweiligen Seitenwänden (3e) in die Richtung zu einer Mitte der Motorradkarosserie und einander überlagern, wobei die Halter (50, 51) erste Nabenabschnitte (50d, 51 b) haben, durch die die Schwenkwelle (12) eingesetzt ist, und zweite Nabenabschnitte (50e', 51f), befestigt an dem Karosserierahmen (3), und wobei der hintere Arm (8) linke und rechte Arm- Kopfabschnitte (24b, 25b) hat, durch die die Schwenkwelle (12) eingesetzt wird und die zwischen den Seitenwänden (3e) und den ersten Nabenabschnitten (50d, 51 b) angeordnet sind.

7. Motorrad nach Anspruch 6, wobei die Seitenwände (3e) und die Verbindungswände (3f) der Schwenklagerabschnitte (3c) des hinteren Armes einstückig gebildet sind.

8. Motorrad nach Anspruch 6 oder 7, wobei die Arm- Kopfabschnitte (24b, 25b) des hinteren Arms (8) und die Seitenwände (3e) und die Verbindungswände (3f) der Schwenklagerabschnitt (3c) für den hinteren Arm gemeinsam mittels der Schwenkwelle (12) befestigt sind.

9. Motorrad nach einem der Ansprüche 6 bis 8, wobei die Halter einen Teile- Montagehalter zum Montieren eines einer Fußstütze, eines Seitenständers, oder eines Auslassvorrichtungsteils an dem Karosserierahmen enthalten.

10. Motorrad nach einem der Ansprüche 6 bis 9, wobei die Halter zwei von einem Fußhalter, einem Seitenständerhalter, oder einem Auslassvorrichtungsteil- Lagerhalter enthalten.

11. Motorrad nach einem der Ansprüche 6 bis 10, wobei die Verbindungswände (3f) der Schwenklagerabschnitte (3c) für den hinteren Arm an vorderen und hinteren Seiten der Schwenkwelle (12) in der Motorradkarosserie gebildet sind.

## Revendications

1. Motocyclette comportant une ossature de caisse (3) et un bras arrière (8) supporté par une partie (3c) supportant le bras arrière de manière pivotante située sur l'ossature de caisse (3) par l'intermédiaire d'un arbre de pivotement (12), dans laquelle un support de montage de pièces (50, 51) est fourni de telle sorte qu'une première partie du support de montage de pièces (50, 51) est fixée sur l'arbre de pivotement (12), et une seconde partie du support de montage de pièces (50, 51) est fixée sur l'ossature de caisse (3) par l'intermédiaire d'un support intermédiaire agencé sous la forme d'une partie indépendante du support de montage de pièces (50, 51).

2. Motocyclette selon la revendication 1, dans laquelle le bras arrière (8) est supporté pour un mouvement de pivotement vertical par la partie (3c) supportant le bras arrière de manière pivotante située sur l'ossature de caisse (3) par l'intermédiaire de l'arbre de pivotement (12), dans laquelle le bras arrière (8) a des parties de tête de bras gauche et droite (24a, 25a), l'arbre de pivotement (12) étant inséré à travers des parties de palier (24b, 25b) situées à leurs extrémités avant, dans laquelle les parties de tête de bras gauche et droite (24a, 25a) sont disposées transversalement à l'extérieur de la partie (3c) supportant le bras arrière de manière pivotante, dans laquelle le support de montage de pièces (50, 51) est disposé sur l'extérieur de chacune des parties de tête de bras gauche et droite (24a, 25a), et dans laquelle la première partie de chaque support de montage de pièces (50, 51) est fixée sur l'arbre de pivotement (12), et sa seconde partie est fixée sur l'ossature de caisse (3).

3. Motocyclette selon la revendication 1 ou 2, comportant en outre une partie de bossage formée dans la partie du support de montage de pièces (50, 51) devant être monté sur l'arbre de pivotement (12),

4. Motocyclette selon l'une des revendications 1 à 3, dans laquelle le support intermédiaire disposé sur un premier côté de la carrosserie de motocyclette est formé sous la forme d'un support de béquille (73) destiné à supporter une béquille latérale, le support de béquille (73) et le support de montage de pièces (50, 51) étant respectivement un forgeage et un moulage sous pression d'alliage léger.

5. Motocyclette selon l'une des revendications 1 à 4, dans laquelle le support intermédiaire disposé sur un second côté de la carrosserie de motocyclette est formé comme un support (77) supportant un tuyau d'échappement, le support (77) supportant un tuyau d'échappement (77) et le support de montage de pièces (50, 51) étant des moulages sous pression d'alliage léger.

6. Motocyclette selon l'une des revendications 1 à 5, dans laquelle l'ossature de caisse (3) est du type à assemblage avec des éléments de châssis gauche et droit (3a) fixés à l'aide d'un boulon, le bras arrière (8) destiné à supporter une roue arrière (7) à son extrémité arrière est supporté pour un mouvement de pivotement par l'intermédiaire de l'arbre de pivotement (12) par les parties (3c) supportant le bras arrière de manière pivotante de l'ossature de caisse (3), et des supports (50, 51), en tant qu'éléments de support, sont montés de manière amovible sur l'ossature de caisse (3), dans laquelle les parties (3c) supportant le bras arrière de manière pivotante de l'ossature de caisse (3) ont des parois latérales gauche et droite (3e) à travers lesquelles l'arbre de pivotement (12) est inséré, et des parois de liaison gauche et droite (3f) qui s'étendent à partir des parois latérales respectives (3e) vers un centre d'une carrosserie de motocyclette, et viennent en butée l'une contre l'autre, dans laquelle les supports (50, 51) ont des premières parties de bossage (50d, 51b) à travers lesquelles l'arbre de pivotement (12) est inséré, et des secondes parties de bossage (50e', 51f) fixées sur l'ossature de caisse (3), et dans laquelle le bras arrière (8) a des parties de tête de bras gauche et droite (24b, 25b) à travers lesquelles l'arbre de pivotement (12) est inséré, et qui sont disposées entre les parois latérales (3e) et les premières parties de bossage (50d, 51b).

7. Motocyclette selon la revendication 6, dans laquelle les parois latérales (3e) et les parois de liaison (3f) des parties (3c) supportant le bras arrière de manière pivotante sont formées en un seul bloc.

8. Motocyclette selon la revendication 6 ou 7, dans laquelle les parties de tête de bras (24b, 25b) du bras arrière (8) et les parois latérales (3e) et les parois de liaison (3f) des parties (3c) supportant le bras arrière de manière pivotante sont fixées ensemble par l'intermédiaire de l'arbre de pivotement (12).

9. Motocyclette selon l'une des revendications 6 à 8, dans laquelle les supports comportent un support de montage de pièces pour montage d'au moins un élément parmi un repose-pieds, une béquille latérale ou une partie de dispositif d'échappement sur l'ossature de caisse.

10. Motocyclette selon l'une des revendications 6 à 9, dans laquelle les supports comportent deux quelconques parmi un support de repose-pieds, un support de béquille latérale ou un support supportant une partie de dispositif d'échappement.

11. Motocyclette selon l'une des revendications 6 à 10, dans laquelle les parois de liaison (3f) des parties (3c) supportant le bras arrière de manière pivotante sont formées sur des côtés avant et arrière de l'arbre de pivotement (12) dans la carrosserie de motocyclette.
